# EUROPEAN PATENT APPLICATION

(11) **EP 3 885 309 A1**
(43) Date of publication of application: **29.09.2021**
(21) Application number: 20165905.9
(22) Date of filing: 26.03.2020
(51) Int. Cl.: B67D 1/08, B64D 11/00, B67D 3/00

(54) **LIQUID DISPENSER FOR A TROLLEY OR A GALLEY**

(71) Applicant: Gate Gourmet Switzerland GmbH, 8152 Glattbrugg (CH)
(72) Inventor: ROSETH, Per Ivar Gamman, 1051 KR Amsterdam (NL); KAZAKLI, Ahmet Erdem, 1432 MC Aalsmeer (NL)
(74) Representative: Ricker, Mathias

(57) **Abstract**

The invention relates to a liquid dispenser, to a housing thereof and to a method for dispensing a liquid. The liquid dispenser is mounted into a trolley or a galley of an aircraft. The liquid dispenser comprises the housing and a container for containing the liquid of the dispenser. The container is placed inside the housing, wherein the housing comprises a holder, which is variable between at least a first position and a second position, wherein the first position is a parking position of the holder and wherein the second position is a dispense position of the holder, in which the holder is configured to hold a cup while fluid is dispensed into the cup from the container.

## Description

### BACKGROUND OF THE INVENTION

The invention relates to a liquid dispenser for a trolley or a galley, to a housing thereof and to a method for dispensing a liquid.

In modern aircraft logistics there is a major interest to lower the amount of in particular plastic waste. During service on board an aircraft, typically small water bottles are either individually provided to each of the passengers or the crew dispenses refill cups from single use larger plastic bottles, which both creates a significant amount of waste. Further, due to air travel regulations recycling of these bottles cannot be properly done.

Beside the enormous amount of plastic waste created by use of single bottles, storage of the individual bottles requires a lot of space on board the aircraft, in particular within the galley region of an aircraft, where the availability of space already is crucial for food preparation and service.

Current available food and beverage trolleys as the one presented in the US 2012/0318822 A1 provide a service trolley, which comprises a dispensing unit, a hot and a cold water container, each of which are located at separate places within the trolley. The service trolley presented therein further comprises a dispensing point. The dispensing point comprises a mount, e.g. a holder, for holding a cup while dispensing a fluid into the cup from a tap mounted at the dispenser. During service, the dispensing point, which typically comprises at least one tap, extends above the top of the trolley and therefore the liquid is pumped from a container, e.g. located at the bottom of the trolley, up to the tap. However, the dispensing point can be lowered from this vertically extending position to a storage position inside the trolley. To this purpose, the trolley comprises a lift system, which is additionally located inside the trolley. Implementing a lift system into a trolley reduces the storage space of the trolley significantly and adds extra weight to the trolley.

It is therefore an object of the present invention, to provide a liquid dispenser for a trolley complying with the spatial requirements of a trolley or a galley.

### SUMMARY OF THE INVENTION

The invention relates to a liquid dispenser for a trolley and/or a galley comprising a housing, a container for containing a liquid, the container being placed inside the housing and a dispensing means for dispensing the liquid, wherein the housing comprises a holder, which is moveable between at least a first position and a second position, wherein the first position is a parking position of the holder and wherein the second position is a dispense position of the holder, in which the holder is configured to hold a cup while fluid is dispensed into the cup from the container.

In one embodiment the holder is rotatably mounted at the housing to move between the dispense position and the parking position.

In another embodiment the housing comprises a recess configured to receive the holder when the holder is in its parking position.

In a further embodiment the housing comprises an opening for inserting and/or removing the container and a removable cover for covering the opening of the housing, or the opening of the housing and an opening of the container.

In a still further embodiment, the cover comprises a locking device, which in a locking position locks the cover to the housing and which in a release position releases the cover from the housing to allow replacing the container.

In an even further embodiment the container comprises an opening, which is closed by the cover, when the cover covers the opening of the housing.

In a further embodiment the container comprises first positioning means, configured for placing the container at a target position inside the housing and wherein the housing comprises second positioning means, configured for placing the container at the target position inside the housing, and wherein the first and the second positioning means are configured to interact with each other, such that at the target position the container is arranged relative to the housing , to allow for dispensing the liquid contained in the container into the cup while the cup is hold by the holder in the dispense position.

In a further embodiment the container is snug fit with the housing.

In a further embodiment the opening of the container is defined by an edge area of the container, which comprises a sealing, and wherein the sealing is snug fit with the cover, when the cover is locked by the locking device.

In a further embodiment the housing comprises support means, configured to position the liquid dispenser at a rack position of a trolley or a galley or on top of the trolley.

In a further embodiment the cover of the housing comprises a refill-opening, through which the opening of the container can be accessed and which is lockable by a sealing cap.

In a further embodiment the dispensing means, which is preferably a tap for dispensing the liquid, is part of the container or the housing.

In a still further embodiment the housing comprises a cutout to allow accessing the container, in particular for mounting and/or dismounting of the dispensing means, while the container is placed inside the housing.

The invention also relates to a housing for a liquid dispenser of a trolley and/or a galley, wherein the housing comprises a holder, which is moveable between at least a first position and a second position, wherein the first position is a parking position of the holder and wherein the second position is a dispense position of the holder, in which the holder is configured to hold a cup while fluid is dispensed into the cup from the container and the housing further comprises an opening for inserting and/or removing of a container and a removable cover for covering the opening of the housing, or the opening of the housing and the container.

The invention also relates to an aircraft trolley and/or a galley comprising the liquid dispenser according to any of the above embodiments or the housing defined above, wherein the trolley and/or the galley further comprises support means to mechanically position and to mechanically guide mounting and/or unmounting of the liquid dispenser, wherein the support means comprise grooved pieces, configured to receive oppositely grooved pieces of the housing of the dispenser to position the liquid dispenser at a rack position of the trolley and/or the galley.

In one embodiment a front panel of the housing of the liquid dispenser comprises fixing means to fix advertising slides, in particular it comprises a convex curved area, preferably a cylindrically or conically curved area, wherein the convex curved area comprises fixing means to fix advertising slides at the convex curved area.

### DETAILLED DESCRIPTION

The invention is based on the concept to provide a liquid dispenser, which generally fits into a service facility used aboard an aircraft, such as a trolley or a galley.

The liquid dispenser presented by the invention does not require additional space of the service facility due to, for example, a non-variable, static dispense point, i.e. a permanent mount used for holding or positioning of a cup, in order to fill the cup with a liquid of the dispenser. In this sense, the liquid dispenser is compact.

The liquid dispenser according to the invention is, preferably, configured to use the concept of essentially positioning a dispense tap in the lower part of the housing or of the container such that when the liquid level lowers, most of the liquid still can be dispensed. Otherwise, any liquid carried inside the container, which is bellow this liquid level will not be dispensed through gravity. This, in principle, defines the shape of the container and the housing according to the invention which carries the liquid.

The compactness of the liquid dispenser results from the feature of a variable or modular holder. The holder is variable between at least a first position and a second position, wherein the first position is a parking position and the second position is a dispense position. The holder is variable between the first and second position, in that the holder can be, in particular manually switched, moved or transferred from the first position into the second position and the holder can be equally reversed from or into anyone of these positions. Thereby the holder temporally provides a dispense mount.

A dispense means relates to a device, through which filling of a cup with liquid of the container can be initiated and stopped. A dispense means most preferably relates to a tap or a spigot. The dispense means, in particular the tap, can be equally mounted to the container or the housing. In any case, the dispense means is mounted or attached to the housing or the container, such that the release of a liquid of the container into a cup is controlled by the dispense means. The dispense means essentially allows dosing the liquid release.

In a preferred embodiment, the container comprises the tap. That is, the container is placed inside the housing with the tap attached to the container.

In a further embodiment, the tap is attached to the container, when the container is placed inside the housing. Preferably, the container is snug fit with the housing to facilitate mounting of the dispense means.

A liquid comprises any kind of liquid, in particular beverages, preferably the liquid is water.

The holder provides a dispense mount when pushed or transferred into the dispense position. The parking position relates to a compact position. The parking position is a space saving position.

Because the holder is movable between a parking position and a dispense position, the liquid dispenser does not require extra space for a permanent dispense mount. The room required by a static mount for holding and positioning of a cup underneath the tab is thus not limited by a static dispense mount. For example, the holder, i.e. the dispense mount does not permanently protrude away from the housing or extends out of the housing. Only in the dispense position or when being moved into the dispense position, the holder requires more space than in the parking position. For example, a crew member wants to access a rack position of the trolley located directly underneath the rack position within which the liquid dispenser is installed, the crew member flips or moves the holder from its dispense position into its parking position and gains immediate access to the desired rack position underneath the dispenser.

In an embodiment, the holder is pushed from the dispense position into the parking position.

Due to the moveable, e.g. variable or flexible position of the holder between a parking and a dispense position, the liquid dispenser requires less space in a galley and or a trolley.

According to the invention a holder is understood as a cup holder, configured to hold a cup, e.g. a cup which is typically used for providing beverages on board of an aircraft. The holder includes, for example a mount, which allows for holding a cup, a swivel arm configured for grabbing a cup and which in particular can be adapted to the size of a cup, a clamp, a frame, a tablet, or any shaped object configured to carry a cup. A cup equally relates to a pot, a receptacle, a bin, etc..

In a preferred embodiment the holder is of symmetric shape. The holder therefore comprises a symmetry plane. Preferably, the holder is u-shaped. In this case, the holder is divided by its symmetry plane into two essentially mirror symmetric legs, each forming a half of the u-shape. In this preferred embodiment, the symmetry plane essentially coincides with an outflow axis of the liquid. The outflow axis virtually corresponds to the outflow direction of the liquid out of the dispense means, e.g. the tap, into a cup. An outflow axis can be equally defined by the outflow direction of the liquid out of the container into the tap. The defined outflow axis prescribes an outflow plane of the liquid.

In a preferred embodiment, the outflow plane coincides with a symmetry plane of the housing and or of the container.

In a further most preferred embodiment, the container and the housing are of rectangular cubic shape and symmetrically arranged in relation to each other. The outflow plane and the symmetry plane resulting from the relative housing/container arrangement coincide with each other.

In a preferred embodiment, the holder is rotatably mounted at the housing to move between the dispense position and the parking position. The holder is connected to the housing preferably at two pivot points within a recess of the housing. The rotational axis of the holder is preferably essential perpendicular to the outflow plane of the liquid.

Preferably, to switch between the dispense position and the parking position, the holder is rotatable mounted at the housing. Thereby the rotational axis of the holder is advantageously perpendicularly arranged to the outflow axis of the liquid, which is described as an essentially straight line along which the fluid ideally flows when the fluid exits the dispense means, e.g. the tap towards the cup. The outflow axis can be a symmetry axis of the tap. In the preferred embodiment of the holder being u-shaped, the axis of rotation passes symmetrically through the respective upper portions of the u-shaped legs of the u-shaped holder so that the arcuate lower portion of the u-shaped holder pivots back and forth between a first position and a second position of the holder. Preferably, the lower part of the holder is designed to accommodate a cup at least in sections. The pivot points in the respective upper part of the legs of the u-shaped holder are rotatably mounted on the housing.

In a further embodiment, the rotational axis is arranged in a plane parallel to the outflow plane of the liquid. In this embodiment the holder is preferably connected, for example to a telescope bar, which is pushed into the housing to reach the parking position and which is pulled out of the housing to reach the dispense position. The holder is rotatable around the telescope bar, i.e. the telescope bar essentially forms the rotational axis of the holder.

In a preferred embodiment, the holder is designed as a U-shaped tab.

In a particularly preferred embodiment, the tab is formed as a bowl and rotatable connected to the housing. To fill the liquid into a cup, the cup is positioned inside the bowl. The bowl supports the cup in its position while dispensing. Preferably, the inner shape of the bowl is formed to accommodate different cup sizes.

In a preferred embodiment the liquid dispenser comprises a recess configured to receive the holder when the holder is in its parking position.

In a preferred embodiment, part of the outer surface of the bowl is flush with the outer surface of the housing, when the holder is moved in its parking position. This is achieved by rotatable mounting the bowl in the recess of the housing. In its parking position, the bowl shields the tap from the environment, in particular from unwanted contact by persons. This serves to improve hygienic aspects of the liquid dispenser on board of an aircraft.

A parking position of the holder refers to a compact position of the holder, in that the holder requires less space than in its dispense position, in particular extends spatially less in a direction away from the housing than in its dispense position, most preferably the holder protrudes less over the outer skin of the housing in its parking position than when in its dispense position, for example the holder is in its parking position plugged into a recess of the housing, or the holder telescopes in its parking position at least partially into itself and or into the housing.

In a most preferred embodiment of the liquid dispenser, the holder is fittingly inserted into a recess of the housing. When fittingly inserted into the housing's recess, preferably at least some part of the holder forms a part of the outer surface of the dispenser. In this case, that part of the holder forming the outer surface of the dispenser is aligned with the surface of the dispenser. Preferably, the part of the holder forming the outer surface of the dispenser smoothly transitions into the surface of the dispenser. In particular, there is a smooth transition of the holder surface part to the directly adjacent dispenser's surface part. Due to the recess of the housing, the parking position is a space saving position. A space saving position in this context is a compact position and thus connects to the compact design of the dispenser.

Alternatively, the holder can be formed as a foldable tray. The try is foldable from a flat shape in its parking position, into a step like shape in the dispense position. For example, the foldable rectangular tray is divided into three rectangular segments. A first segment is rotatable connected to the second segment, which rotatable connects to the third segment. Upon withdrawal from the parking position, the individual segments are rotated to form a step like structure, wherein one of the segments is positioned underneath the dispense means, e.g. the tap, such that a cup can be positioned onto the segment while filling the cup. In the dispense position, the segments are mechanically stabilized by support elements attached to the segments, in order to support the step like shape. In the parking position the tray is pushed into a slit, which is located at the bottom of the dispenser, i.e. located at the bottom of the housing. The slit allows the tray-shaped holder to be inserted into a region inside the housing, which is configured to store the unfolded tray in its parking position. For example, the region is formed as a cavity inside the housing. The parking position is reached, for example when the tray is pushed completely into the cavity. The dispense position is achieved by pulling the tray out of the cavity. Therefore, for example at the front of the tray a handle is formed, which allows pulling the tray out of the parking position, i.e. out of the recess.

A dispense position refers to a position, in which the holder carries a cup while the fluid of the container is dispensed into the cup. In the dispense position, the holder is extended or extracted from the compact parking position. For example the holder is spaced apart from its compact parking position. Consequently, in the dispense position the holder requires more space than the parking position. In the dispense position the holder forms a dispense mount.

The liquid dispenser comprises a housing. The liquid dispenser further comprises a container, whereas the container is located inside the housing. The housing forms the outer skin of the liquid dispenser. The housing is adapted to be mounted in a trolley or in a galley, e.g. by sliding the housing into a rack position of the trolley or into a similar mount of a galley.

In its inside, the housing comprises the container, whereby the housing also supports mechanical bearing of the container through positioning means. The positioning means can be located at the housing or at the container or at both entities. The housing can further comprise a tap for dispensing the liquid.

The container is located inside the housing. Therefore, the container has a volume adapted to completely fit the container inside the volume of the housing. Most preferably, the container is completely inside the housing. Thereby, the volume of the container is preferably adjusted to ideally fit the volume of the housing, such that the container's liquid volume is maximized, e.g. the container efficiently uses as much of the inner housing volume for liquid storage as possible, or as available. That is the container preferably uses all of the volume of the housing, which is not required by constructional elements of the housing or by constructional elements of the container or by constructional elements of both, or which is not accessible due to constructional elements of the housing and/or of the container. Constructional elements, for example are used to relatively position the container inside the housing, i.e. to interrelate the container position with the housing position.

Preferably the container comprises a volume of 2 to 40 liter, or a volume of 2 to 35 liter, or a volume of 5 to 30 liter.

Preferably, the housing of the liquid dispenser comprises a recess configured to receive the holder when the holder is in its parking position, thereby reducing the spatial exposition of the holder in the parking position. Preferably, the size of the recess is large enough to fully receive the holder. When switching the holder from the parking position into the dispense position, the holder leaves the fitted position inside the recess and rotates into the dispense position. The holder swings or pivots from the first position into the second position. Alternatively, the holder is retractable mounted at the housing. In this case, the holder telescopes into the housing and is retracted out of the housing into the dispense position. In this case the holder is, for example formed as a plate with, in particular a telescope bar affixed at one side.

Preferably, the housing of the liquid dispenser comprises an opening for inserting and/or removing the container and a removable cover for covering the opening. The removable cover of the housing can be formed as a lid of the housing. In this preferred case, the lid forms one side wall, i.e. the upper side wall of the housing. When removing the cover, the container can be inserted into the housing. For example, a crew member withdraws the dispenser from a rack position in the trolley to exchange the container inside the housing with another container because the container is empty. In this case the container is already filled with a liquid when placed inside the housing. Alternatively, when the container is not exchanged, the cover of the housing can be removed to refill the container with liquid.

In a preferred embodiment the front wall of the housing is configured as the cover. The front wall of the housing comprises the recess and the holder. The front wall is rotatable connected with a side wall of the housing. To open the housing the front wall is rotated towards the side wall. The front wall is turned sideways towards the side wall to access the container inside the housing. The side wall can be any of the two walls of the housing, which are essential arranged in parallel to the outflow plane of the dispenser. Alternatively, either the bottom wall or the top wall of the housing, which is essentially perpendicularly arranged to the outflow plane is rotatable connected with the front wall of the housing.

Preferably, the cover comprises a locking device, which in a locking position locks the cover to the housing and which in a release position releases the cover from the housing to allow replacing the container, or to allow refilling of the container with liquid.

Preferably, the locking device is a lever mechanism. The lever mechanism clamps the cover to the housing, exerting a large-area contact pressure on the cover so that the cover is pressed against the opening in the housing over a substantial part of its extension. The lever mechanism is flush with the surface of the cover. In particular, the lever mechanism is integrated into the cover in its locking position. In the open position, the lever protrudes from the cover. The opening of the housing is closed by manually folding the lever into the surface of the cover.

Preferably, the container comprises an opening, which is closed by the cover, when the cover covers the opening of the housing.

Preferably, the opening of the container is defined by an edge area of the container, which comprises a sealing, and wherein the sealing is snug fit with the cover, when the cover is locked by the locking device. That is the cover is in contact with the sealing of the container. In particular the container is thereby liquid tight closed.

In a preferred embodiment of the liquid dispenser the container is liquid tight closed means tightening of a sealing at the opening of the container by fastening of the lever mechanism of the cover. In this case, a seal runs along the upper edge of the container and is embedded in the upper edge of the container. The container is positioned inside the housing in such a way that the large surface contact pressure exerted on the cover by the closed lever mechanism creates a fluid-tight seal for the container. The contact pressure of the cover also stabilizes the container in its position within the housing. Therefore, the size ratios of the container to the housing are coordinated in such a way that a frictional connection is created between the two s by the locking device, which can be a lever mechanism.

Preferably, the dispensing means, which is preferably a tap for dispensing the liquid, is part of the container or the housing.

In an embodiment, the dispensing means, in particular a tap, is mounted by use of a Lu-er-System to the container and or to the housing.

The invention also relates to a container. In particular to a container configured to be placed inside a housing according to the invention. The container and the housing according to the invention are positioned in relation to each other, i.e. according to the invention the container and the housing form interrelated products. The housing and the container thereby interrelate with each other, such that the container is positioned at a target position inside the housing.

In a preferred embodiment, the housing is cuboid. In a preferred embodiment, the container is essentially cubic rectangular shaped. In a most preferred embodiment, the housing and the container are essentially cubic rectangular shaped.

Preferably, the container of the liquid dispenser comprises a tilted surface as a liquid guiding surface, wherein the surface tilt is such that a liquid is guided through gravity force towards a tap, whereas the tap is mounted into the container or whereas the tap is mounted into the housing. The liquid guiding surface thus typically forms the bottom of the container or is part of the bottom of the container. However, the liquid guiding surface may also be achieved by tilting the container itself. Therefore the container is mounted inside the housing, such that the container is tilted. Support structures of the housing, configured to position the container inside the housing, can be formed as to tilt the container inside the housing, such that a liquid contained in the container is guided towards a dispense means, e.g. a tap, by gravity forces. The tap is mounted in proximity to the bottom of the container. Alternatively the tap is mounted in proximity to the bottom of the housing, wherein an exit hole within a wall, in particular within the front wall of the container allows connecting the container to the dispensing means.

According to the invention, a container for a liquid dispenser of a trolley and/or a galley on board of an aircraft, comprises first positioning means configured for placing the container at a target position inside a housing. The container is positioned, such that at the target position the container is arranged relative to the housing, to allow for dispensing the liquid contained in the container into a cup, while the cup is hold by the holder in the dispense positon.

According to the invention, a housing for a liquid dispenser of a trolley and/or a galley on board of an aircraft, comprises second positioning means configured for placing a container, at a target position inside the housing, such that at the target position the container is arranged relative to the housing, to allow for dispensing the liquid contained in the container into the cup while the cup is hold by the holder in the second positon.

The housing according to the invention for a liquid dispenser of a trolley and/or a galley, wherein the housing comprises a holder, which is moveable between at least a first position and a second position, wherein the first position is a parking position of the holder and wherein the second position is a dispense position of the holder, in which the holder is configured to hold a cup while fluid is dispensed into the cup from the container and the housing further comprises, an opening for inserting and/or removing of a container and a removable cover for covering the opening of the housing, or the opening of the housing and the container.

In a most preferred embodiment of the liquid dispenser, the container is snug fit with the housing. The container is in contact with the housing via their respective positioning means.

Preferably, the housing of the liquid dispenser comprises a cutout to allow accessing the container for mounting and/or dismounting of a tap, while the container is placed inside the housing.

In order to define a target position of the container inside the housing, the liquid dispenser is described as positioned within a Cartesian coordinate system. This allows describing the relative positioning between the container and the housing. Therefore the liquid dispenser is located in a Cartesian coordinate system as follows:
Considering, exemplarily a rectangular cubic shaped container and a rectangular cubic shaped housing, the side walls of the housing are essentially aligned parallel to each other along an x-axis. The front side of the housing corresponds to the side, from which a tap protrudes. The rear side of the housing opposites the front side. Both, the front side and the rear side run essentially parallel to the y-axis of the coordinate system. The vertical extension of the liquid dispenser is described by the Z-axis of the coordinate system. Each individual assembly, e.g. the housing, the holder, the container, etc., of the liquid dispenser can be described by a coordinate system specific to that assembly, wherein the center of the coordinate system coincides with the geometric center or centroid of the assembly. To simplify matters, the coordinate system of the housing coincides with the coordinate system of the liquid dispenser, i.e., the liquid dispenser and the housing of the dispenser are described with the same coordinate system. To further simplify matters, the origin of the coordinate system coincides with the centroid of the housing.

The target position is described in the coordinate system of the container. The origin of the coordinate system of the container coincides with the centroid of the container. Consequently, a relative position of the container inside the housing is described through a translation between the centroid of the container relative to the centroid of the housing. In other words, the target position describes a relative coordinate difference expressed in the X, Y, Z components of the target position, by which the coordinate origin of the housing would translate into the coordinate system of the container or vice versa.

The X, Y, Z components of the target position, thus specify the necessary translation of the container within the housing.

The target position is characterized by the fact that the container is snug fit with the housing. The container is restricted in its freedom of movement at the target position by first positioning means, which interact with the second positioning means of the housing. In particular, the container is restricted in its three dimensional movement through the contact between the first and second positioning means with each other. The respective positioning means can be designed as areas that adjoin the container wall and the inside housing wall. The positioning means of the container form support surface areas, in order to interact with the respective support surface areas of the housing. The sum of the support surface areas of the positioning means used for supporting the container at its target position can be expressed as the target area.

The Z-coordinate of the target position is characterized by the feature that the container is arranged in its vertical position within the housing, in such a way that the opening of the container, with the cover closed, is pressed by the cover towards the bottom of the housing. The pressure exerted by the cover, in particular acts over a large area along the edge of the opening of the container. Preferably, the container is thereby pressed onto positioning means arranged at the bottom of the housing.

The X-coordinate of the target position is characterized by the feature that it specifies the container in its X-position within the housing in such a way that the container is essentially hindered from moving in the X-direction. For example, the container does not move within the housing due to acceleration forces occurring during flight.

In an embodiment the front wall of the container can be pressed against the inside front wall of the housing to limit the movement of the container in this direction of the X-axis. The front wall of the container is the wall through which the liquid flows out of the container. Thus the inside of the front wall of the housing would be considered as the positioning means, e.g. the simplest form of positioning means. Similarly, alternative positioning means in the form of a surface bulge or a surface indentation, so to speak a bulge or indentation configured as contact surfaces, can also be regarded as positioning means. The positioning means are at the inside walls of the housing and at the outside walls of the container. Alternatively, a contact surface correspondingly formed on the front wall of the container can serve as positioning means. Or a contact surface correspondingly formed on both walls, i.e. at the container's outside wall and at the housing's inside wall.

Similarly, in an embodiment, the rear wall of the container may be pressed against the inside of the rear wall of the housing to limit the movement of the container in this direction of the X-axis. Similarly, an alternative positioning means in the form of a bulge or indentation, so to speak a bulge or indentation designed as a contact surface, can also be regarded as positioning means of the inside of the rear wall of the housing. Or a pressing surface formed accordingly on the rear wall of the container. Preferably there is a contact surface, which is formed on both walls. Most preferably, there is a plurality of contact surfaces formed as positioning means on both walls, i.e. the container and the housing walls.

In a most preferred embodiment, the X component of the target position is most preferably chosen, such that the container is arranged inside the housing regarding respective symmetry planes or symmetry axis. For example, the container is of similar cubic rectangular shape as the housing. The outflow of the housing, which carries the dispensing means, e.g. a tap, is arranged to coincide with the respective axis of the opening of the container for mounting the tap or for accessing the opening.

The Y-coordinate of the target position is characterized in that it arranges the container in its Y-position within the housing in such a way that the container does not move any further in the Y-direction, i.e. the container hindered from moving by the positioning means in the respective coordinate directions. The container is thus locked in its movement along the Y axis by specifying the Y coordinate of the target position. For example, the container does not move within the housing due to acceleration forces occurring during flight.

In one embodiment, the side wall of the container can be pressed against the inside of the respective side wall of the housing to limit the movement of the container in this direction of the Y-axis. The respective side wall of the container is the wall which runs essentially parallel to a direction of outflow of the liquid from the container. Thus, the inside of the respective side wall of the housing would be considered the simplest form of a positioning means. Similarly, an alternative positioning means in the form of a bulge or indentation, so to speak a bulge or indentation designed as a contact surface, can also be regarded as positioning means of the inside of the respective side wall of the housing. Or a pressing surface formed accordingly on the respective side wall of the container. Or a contact surface formed on both walls. The container in a design is inhibited in its freedom of movement along the Y-axis by pressing against positioning means of the respective side walls. Preferably there is a contact surface, which is formed on both walls. Most preferably, there is a plurality of contact surfaces formed as positioning means on both walls.

The Y component of the target position is most preferably chosen, such that the container is arranged inside the housing regarding respective symmetry planes or symmetry axis of the housing and or of the container. For example, the container is of similar cubic rectangular shape as the housing. Consequently, the respective symmetry planes of the housing and of the container are arranged to coincide with each other.

Preferably, the housing of the liquid dispenser comprises means configured to transport the dispenser. In this case, means supporting the transport of the container are openings in the housing of the dispenser, such that a crew member can reach into the openings by hand, for example to push the dispenser into a trolley rack position.

Liquid dispenser according to any of the previous claims, wherein the housing comprises support means, configured to position the liquid dispenser at a trolley rack position.

Preferably, the support means comprise grooved pieces, configured to receive oppositely grooved pieces of the trolley or of the galley to slide the liquid dispenser into a rack position of the trolley or the galley.

Preferably, the housing of the liquid dispenser comprises a refill-opening, which is locked by a sealing cap and which accesses the opening of the container. In this case the refill-opening allows for refilling a liquid into the finally installed container inside the housing. The refill opening can also be used to add an ingredient to the liquid, such as a cleaning tablet to clean the container before refilling. Alternatively, a flavoring, vitamin or mineral tablet may be added to the liquid through the opening, especially when the container is filled with water. This makes it possible to easily adapt pure water to the needs of the customer without having to keep a large number of different drinks ready. This allows the variety of products in the service area to be increased while generating less waste and in a more space-saving way.

Preferably, the cover of the housing comprises the refill-opening, through which the opening of the container can be accessed and which is lockable by a sealing cap.

Preferably, the container of the liquid dispenser comprises a tap to dispense the liquid. In this embodiment, a container according to the invention is provided, configured to snug fit into the housing. The housing is, for example permanently mounted into a trolley according to the invention. Consequently, there is no need to provide additional liquids in plastic bottles. In particular, the container can be a recyclable container, which can be refilled after cleaning. The individual container provided a less space consuming than a plurality of individual plastic bottles.

Preferably, the housing of the liquid dispenser comprises a secure mechanism to prevent sliding of the liquid dispenser when fully inserted into a height position of a trolley. In this case, the housing is connected to the insertion position of the trolley or galley in such a way that the housing cannot slip out of the insertion position unintentionally.

In an embodiment, the mounting mechanism of the liquid dispenser inside the trolley allows the housing to be pulled out of the rack position of the trolley partially. I.e. the dispenser is released to a specific position within the rack of the trolley, such that the holder can be brought into its dispensing position.

In an embodiment, the container is a bladder tank, e.g. a tank made out of soft material, e.g. any flexible material showing elastic properties, such that the container volume for example adapts to the amount of liquid it carries inside, i.e. shrinks or expands. The container can also be a paper tank, e.g. made out of pulp, whereas the tank is compostable or biodegradable, thereby even further reducing the amount of plastic needed. Alternatively, the container can be made of any kind of washable and/or durable material, e.g. any kind of plastics used in beverage applications. The container may further comprise a filtration system, which purifies the liquid contained inside the container. Thereby the filtration system can be preferably based on, for example mercury free LED technology, whereas this technology enables disinfecting the liquid directly at the point of consumption and enables intermittent on-demand disinfection, which enhances power savings and prolongs life time of the LED system. Further, alternative filtration systems can be based on, for example electrolytes, osmosis, activated oxygen, carbon coconut carbon, sediment, alkaline advanced osmosis filters also used in combination with each other to satisfy customer requirements.

In an embodiment, the container further comprises an area for mounting, e.g. a tap onto the container, while the container is placed inside the housing to dispense the liquid out of the container. Alternative, a pipe or a tube, preferably a mechanically flexible tube is provided as interconnecting the container with a tap.

In one preferred embedment the container further comprises a tap for dispensing the liquid from the container and the tap extends from the container through the housing to allow using the tap from outside the housing.

According to the invention, an aircraft trolley and/or a galley comprising, the liquid dispenser according or the housing according to the invention, wherein the trolley and/or the galley further comprises support means to mechanically positon and to mechanically guide mounting and/or unmounting of the liquid dispenser, wherein the support means comprise grooved pieces, configured to receive oppositely grooved pieces of the housing of the dispenser to position the liquid dispenser at a rack position of the trolley and/or the galley.

The trolley is, in particular a conventional trolley as it is used in the service area of aircraft. The trolley is especially dimensioned so that the trolley can be moved between the rows of seats of the aircraft. The liquid dispenser is built into the trolley so that the crew member can fill and distribute liquid directly from the dispenser. The compact and variable operability of the dispenser holder allows access to directly adjacent rack positions of the trolley. This space saving also allows more products to be carried during service.

Equally, a galley according to the invention is, in particular a conventional galley. That means, the galley does not require any specific structural requirements for operating the dispenser.

According to the invention a method for dispensing a liquid of a dispenser on board of an aircraft, comprises the steps of:
- placing a container having a liquid or being configured to carry a liquid, inside a housing of the dispenser;
- positioning of the dispense means already connected to the container through a cutout of the housing to allow using the tap from outside the housing and/or mounting the dispense means onto the container via the cutout while the container is positioned, in particular snug fit;
- moving a holder of the housing, which is configured to hold a cup while dispensing into the cup, from a parking position with the housing to a dispense position.

The invention also relates to a system for dispensing a liquid on board of an aircraft, whereas the system comprises a container, which carries a liquid and which comprises a tap for dispensing the liquid, and a housing configured to carry the container in its inside and which is snug fit with the container, comprising a cutout through which the tap of the container extends from the inside to the outside of the housing, and a holder, which is variable between at least a parking position and a dispense position, wherein in the dispense position the holder is configured to hold a cup while fluid is dispensed into the cup from the container, and wherein in the parking position, the holder forms a parking unit with the housing .

In a further embodiment according to the invention, the housing comprises several containers. The containers are arranged in relation to each other within the housing in such a way that the available volume of the housing is optimally used by the arrangement of the containers. In this embodiment, a tap for each respective container can be attached to the housing or to the container itself. A respective holder is rotatable mounted in a respective recess of a respective container. Alternatively a single holder is commonly used and rotatable mounted in a common recess for all of the respective containers. In this embodiment each of the respective containers are positioned at a respective target position through positioning means. In the particular case of multiple container arrangements inside the housing, the positioning means also comprise the individual container walls. That is, positioning the containers next to each other, such that when a plurality of for example cubic shaped containers is used, the containers are snug fit positioned next to each other, such that the containers are respectively supported through the container walls directly adjacent to them.

In a preferred embodiment, the front panel of the housing is formed as a convex curved side wall of the housing, such that the front panel is essentially configured as part of an outer surface of a cylinder with its axis of symmetry oriented in, e.g. the vertical direction of the container. The essentially cylindrical outside of the front panel serves as advertising space. For example, an advertising slide is attached to the outside surface of the front panel. In an embodiment, the front panel is therefore illuminated from inside the housing to promote the slide appearance. Alternatively, the front panel comprises a display, in particular an electronic display, attached to the surface of the front panel. The attached display can be programmed, e.g. means an interface to a board computer of the aircraft.

In an embodiment, the liquid dispenser is positioned on top of a trolley, i.e. the top surface of a trolley, which is typically used for providing food and or beverages during service with the trolley. Therefore, the liquid dispenser is fastened to the trolley via hook and loop fastener, e.g. velco fastening, or the liquid dispenser comprises further protrusions to fasten the liquid dispenser to the side panels or to the front or the back handles of the trolley.

In an embodiment the liquid dispenser, in particular the housing of the liquid dispenser comprises an anti-tamper seal. The anti-tamper seal is understood as a tamper proof closure of the liquid dispenser to avoid in particular unauthorized use, e.g. filling of liquid into the container, opening of the housing to access the inside of the housing, in particular for changing the container. An anti-tamper seal can be, for example any means for marking the refilling of the container or for marking the changing of the container. An anti-tamper seal can be a sticker or a marker attached to the outside of the housing, which allows to distinguish, whether the liquid dispenser is in a used status, e.g. after prior use status, or in a closed, i.e. a sealed status, a before prior use status.

### BRIEF DESCRIPTION OF THE DRAWINGS

Further preferred embodiments of the liquid dispenser according to the invention, of the container according to the invention, of the housing according to the invention and the method of dispensing a fluid on board an aircraft according to the invention result from the following examples described in connection with the figures and their description. Features of these embodiments of the invention can be derived in each case from the description of the other embodiments of the invention. Identical components of the examples are essentially identified by identical reference signs, unless otherwise described or otherwise evident from the context.
Fig. 1a shows a schematic three dimensional view of an embodiment of the liquid dispenser, whereas the figure focuses on the dispensing area of the dispenser.
Fig. 1b shows a schematic three dimensional view of an embodiment of the liquid dispenser, whereas the figure focuses on the locking device of the dispenser.
Fig. 1c shows a schematic three dimensional view of an embodiment of the liquid dispenser, whereas the figure focuses is on the cover of the dispenser.
Fig. 2a shows a schematic exploded three dimensional view of an embodiment of the liquid dispenser from a perspective oblique view.
Fig. 2b shows a schematic exploded three dimensional view of an embodiment of the liquid dispenser from a perspective side view.
Fig. 3 shows a cross sectional drawing of the liquid dispenser along its X-axis.
Fig. 4 shows a top view drawing of the liquid dispenser in the XY- drawing plane.
Fig. 5a shows a side view drawing of the liquid dispenser in an XZ- drawing plane.
Fig. 5b shows a back view drawing of the liquid dispenser in an YZ- drawing plane.
Fig. 6 shows a trolley having the liquid dispenser mounted in an upper position of one of its slide in racks.
Fig. 7 schematically shows an embodiment of a holder of the liquid dispenser comprising swivel arms.
Fig 8 schematically shows a further embodiment of the liquid dispenser, in particular of the liquid dispenser's housing and holder.
Fig. 9 shows schematically a design of the locking device. The locking device is thereby implemented as a lever mechanism.

### DETAILED DESCRIPTION OF THE DRAWINGS

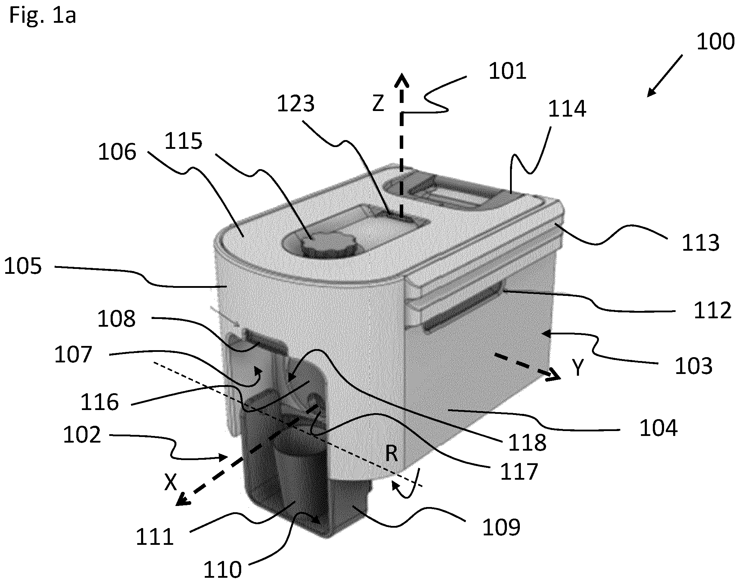

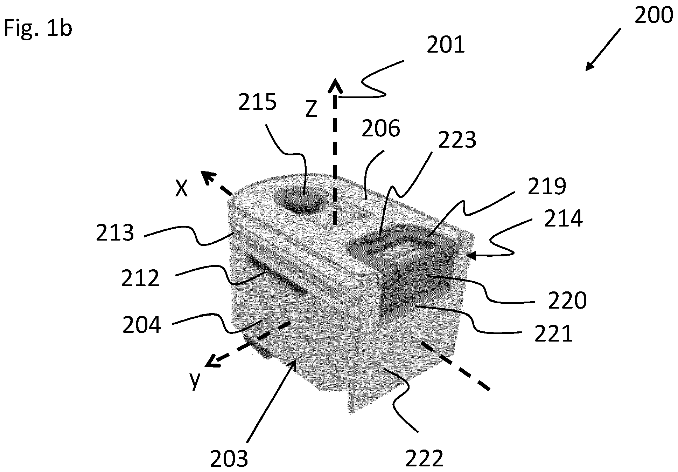

In the embodiment of Fig. 1a a schematic three dimensional view of the essentially cubic shaped liquid dispenser 100 is shown positioned within a coordinate system 101. Thereby in the perspective view a focus is put on the dispensing area 102 of the dispenser 100. The liquid dispenser 100 as shown comprises a housing 103, whereas the housing 103 comprises a side panel 104, a front panel 105 and a cover 106. The curved front panel 105 of the liquid dispenser 100 has a recess 107 of rectangular shape, which cuts out a part of the bottom area of the dispenser 100 and which extends along the z-axis of the coordinate system 101 up to essentially half of the front panel's height 105. On the upper part of the recess 107 there is a notch 108, which serves to secure the holder 109 in its parking position, whereas Fig. 1b shows the holder 109 in its dispense position. For example, the holder 109 can be mechanically locked in its parking position by means of the notch 108. The holder 109 is u-shaped in Fig. 1a. The holder 109 is mounted with a respective side area of the recess 107, such that it can rotate about its axis of rotation R. On the inside of the lower part 110 of the u-shaped holder 109 a cup 111 is positioned, such that liquid can be filled into the cup 111 via a tap (not shown in Fig. 1a), whereas the cap 111 is placed in this dispense position onto the holder 109. An opening 112 is shown on the side panel 104 of the liquid dispenser 100. The opening 112 is shaped 112 in such a way that, for example a member of the Cabin Crew, can hold the dispenser 100 in place and transport it, e.g. to install the dispenser 100 in rack position of a trolley. Above this opening 112, parallel to each other and along the x-direction of the coordinate system 101, there are notched rails 113. These rails 113 are used as support means for clamping or storing the liquid dispenser 100 in complementary support means of the trolley in one of the insertion places of the trolley at a certain height position. These support means are mounted on each of the respective side plates 104 of the liquid dispenser 100. The top of the liquid dispenser housing 103 is formed by the cover 106. Inside the cover 106, a lever mechanism 114 as a locking device 114 of the cover 106 and a cap 115 are schematically shown.

The cap 115 serves to close a refill opening of the cover 106, which is used for external refilling of the container (not shown in Fig. 1a), whereas the container placed inside the housing 103.

The lever mechanism 114 is configured to be flush with the surface of the cover 106. Thereby, the lever mechanism 114 does not hinder insertion of the dispenser 100 into a trolley slot. In an open position, the lever mechanism 114 gives access to the inside of the housing 103. In a closed position, the lever mechanism 114 clamps the cover 106 to the housing 103. In particular, the lever mechanism 114 is configured to press the cover 106 onto a particular region of the housing 103.

Further, partially shown in Fig. 1a is a mounting surface 116 of the container. The mounting surface 116 comprises a hole shaped opening 117, configured to mount a tap (not shown) in the opening 117 from outside the container to the container. Alternatively the tap can also be mounted when the container is located outside the housing 103. Typically for mounting the tap, the opening 117 comprises a thread. In order to excess the opening 117 and the mounting surface 116 of the container, the housing 103 further comprises a mounting area as a cut out 118.

The front panel 105 of the housing 103 is formed as a convex curved side wall of the housing 103, such that the front panel 105 as shown in Fig. 1a is essentially configured as part of an outer surface of a cylinder with its axis of symmetry oriented in the Z-direction of the coordinate system 101. Thereby, the essentially cylindrical outside of the front panel 105 serves as advertising space. For example, an advertising slide is attached to the outside surface of the front panel 105. The front panel 105 can further be illuminated from inside the housing to promote the slide appearance. Alternatively, the front panel 105 comprises a display, in particular electronic display, attached to the surface of the front panel 105, which allows changing the advertisement in a predetermined manner. Therefore, the attached display can be programmed, e.g. means a board computer of the aircraft.

Fig. 1b shows a schematic three dimensional view of an embodiment of the liquid dispenser 200 positioned within a coordinate system 201. Thereby in the perspective view a focus is on the locking device 214 of the dispenser 200. In Fig. 1b the locking device 214 is configured as a lever mechanism 214, which is schematically drawn as divided into a lever 219 and a clamp 220. The clamp 220 engages in a notch 221 in the rear wall 222 of the liquid dispenser 200, when the lever 219 is turned, in particular manually, such that it rests flush on the cover 206. If the lever 219 is flush with the cover 206, a suitable contact pressure is built up via the clamp 220.

The cap 215 serves as a closing cap 215 of a refill-opening and is attached in the front area of the cover 206. The cap 215 can also be used as a screw cap 215 to close the refilling opening by means of a thread. When the cap 215 completely closes the refill opening, the top of the cap 215 is flush with the top of the cover 206 so that the cap 215 does not hinder the liquid dispenser 200 from being inserted into a trolley insertion position or a galley insertion position by protruding.

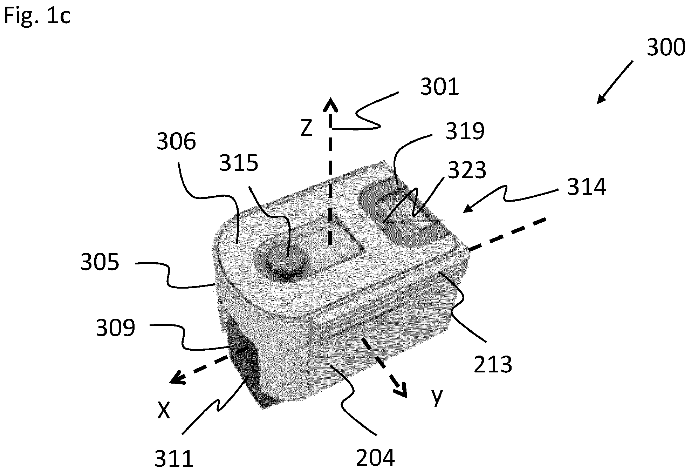

Fig. 1c shows a schematic three dimensional view of an embodiment of the liquid dispenser 300 positioned within a coordinate system 301. Thereby in the perspective view a focus is on the cover 306 of the dispenser 300. In Fig. 1c a slider 323 is shown in the area of the lever 319 of the lever mechanism 314. The slider 323 serves to prevent the lever 319 from opening accidentally. The slider 323 locks the lever 319 in its locking position flush with the cover 306. Further, Fig. 1c shows that the lever 319 and the cap 315 of the refill opening are located in respective recesses. The recesses are drawn larger than the space actually required by these components.

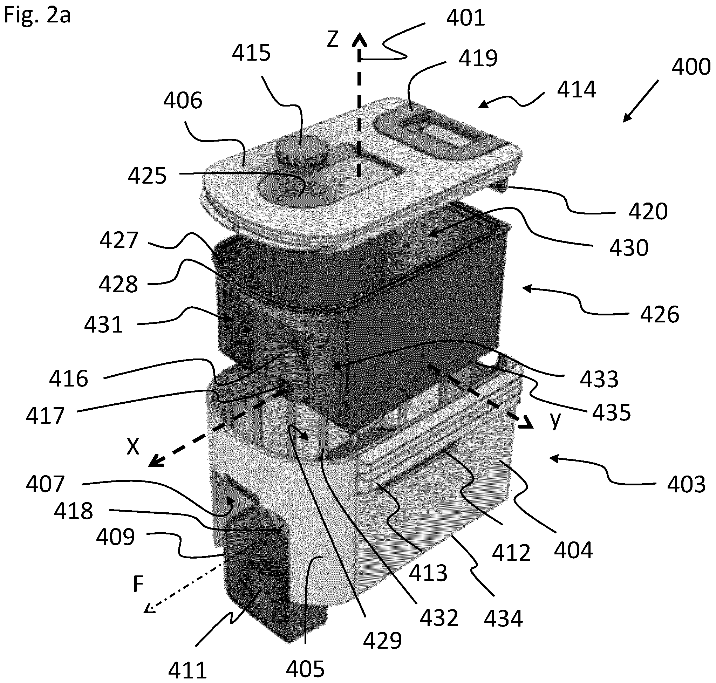

Fig. 2a shows a schematic exploded three dimensional view of an embodiment of the liquid dispenser 400 positioned within a coordinate system 401. Thereby shown are from a perspective oblique view the cover 406 comprising the cap 415, the container 426, the housing 403 and the holder 409.

The u-shaped holder 409 is part of the housing 403 and shown in its dispense position. The holder 409 is shown with a cup 411 arranged for dispensing accordingly. The holder 409 is pivoted on two side walls of the recess 407.

The housing 403 is shown opened upwards. The container 426 as shown in the exploded view is configured to be placed inside the housing 403 through the opening 429 of the housing 403. The container 403 is also shown open at the top. The container 403 has an edge area 428 on its open top side 430. This edge area 428 of the container 426 is configured such that a seal 427 can be laid within the edge area 428. The seal 427 is shown in Fig. 2a as enclosing the edge area 428 of the container 426. The seal 427 is suitable for ensuring that the container 426 is fluid-tight when the cover 406 rests on the housing 403 and consequently also on the container 426, wherein the lever mechanism 414 locks the cover 406 with the clamp 420. The container 426 is positioned within the housing 403, such that the seal 427 is pressed sufficiently by the pressure of the lever mechanism 414 to ensure a fluid-tight closure of the container 426. The container 426 has a front side 431, which points in the direction of the curved front side wall 405 of the housing 403. At the front side of the container 431, it also has a flat mounting surface 416. The mounting surface 416 is used to mount a tap (not shown) on the container 426 to dispense the liquid from inside the container 426 when the container 426 is in its target position placed inside the housing 403. The target position of the container 426 within the housing 403 may be characterized by the mounting surface 416 at the front wall 431 of the container 426 being flush with an equally flat area of a cut-out 418 in the housing 403. The cut-out 418 of the housing 403 is at least partially in the area of the recess 407 of the housing 403 . This makes it possible to mount or change a tap from outside the housing 403 when the container 426 is in its target position inside the housing 403. Furthermore, this also allows the container 426 to be positioned inside the housing 403, in the case, where there already is a tap attached to the mounting surface 416 of the container 426. This means that the cut-out 418 on the housing 403 is large enough to allow for both options, i.e. previous mounting of a tap or exchange of a tap, while the container 426 remains positioned inside the housing 403.

The target position of the container 426 is achieved by the feature that both, the container 426 and the housing 403 have positioning means. Shown here exemplarily are positioning means inside the housing as rib shaped surfaces 432. However, positioning means of the container would also comprise for example the mounting surface 416 attached to the front wall 431 of the container 426 as shown in Fig. 2a. Further positioning means of the container 426 or also of the housing 403 for reaching the target position of the container 426 within the housing 403 can be curved surfaces on both assemblies, which come to rest in each other or on top of each other in such a way that the contact and the housing 403 are positioned and supported relative to each other. For example, the rounded side walls 433 of the container 426 shown in Figure 2a and the likewise rounded side walls of the housing front wall 405 represent such positioning means. The positioning means are configured to control the relative positioning between the container and the housing. Hence any of the in Fig. 2a shown surfaces of the container 426 or of the housing 403, which is configured to support the relative position between both entities 426, 403 acts or is a positioning mean.

Accordingly, the walls of the container 426 and the walls of the housing 403 would already represent the simplest form of positioning means. For example, if the volume of the container 426 to the volume of the housing 403 ratio is such that the side walls of the container 426 rest on the inner surfaces of the side walls of the housing 403, positioning of the container 426 within the housing 403 will be achieved. This means that a certain, predetermined distance between the two assemblies is fixed and determined by these positioning means. The positioning means are used to position the container 426 within the housing 403 at a certain distance away from the housing 403 and at a certain target position within the housing 403. In Fig. 2a the positioning means 432 are shown as cross ribs 432 arranged inside the housing. The positioning means shown as cross ribs 432 in Fig. 2a, position the container 426 within the housing 403, in particular symmetrically to an outflow axis F (shown as dashed line in Fig. 2a), which runs parallel to the X-axis of the liquid dispenser. The outflow axis F is characterized in that, the axis runs through the center of the opening 417 of the mounting surface 416 of the container 426 as shown in Fig 2a. Thus the axis F also runs symmetrically through at least a part of the tap, whereas the tap is attached to the opening 417 of the mounting surface 416.

The target position is characterized in its Z-position component by the feature that the container 426 is positioned at that Z-position in its height above the base plate 434 of the housing 403, such that the cover 406 in the closed state, is able to exert sufficient contact pressure on the container 426, such that the container 426 is closed fluid-tightly upwards (in the Z-direction) by the cover 406. Positioning of the container 426 in its Z-height is achieved by positioning means formed as structural elements, e.g. ribs, surfaces, recesses, etc., arranged at the bottom of the housing 403, in particular on the base plate 434. The structural elements can thereby be for example formed as ribs, which are spatially distributed across the bottom of the housing as shown in Fig 2a. Preferably, the vertical extension of the positioning means used to arrange the container 426 in its z-axis position, are configured to tilt the container 426. Most preferable, the container 426 bottom 435 is already tilted against the cover 406. That is, the container 426 comprises a tilted base plate 435 as the bottom plate. The bottom plate is then tilted against the housing's base plate 434 or against the cover 406.The positioning means arranged at the bottom wall 434 of the housing 403 are adapted to support the variable height profile of the container's bottom base plate 435, such that the container 426 is pressed onto these support elements. In particular, the container 426 is pressed onto the support elements, such that the container 426 is liquid tight closed, when covered by the cover 406 with the lever 419 of the locking mechanism 414 being in its lock position flush with the cover.

In the preferred embodiment shown in Fig. 2a, the target position is characterized in its x-position component by the feature that a tap can be attached to the mounting opening 417 of the mounting surface 416 at the front side wall 405 of the containe4 426, with the container 426 being in its target position within the housing 403. That is, the distance between mounting surface 416 of the front side 405 of the container 426 is positioned, such that it enables mounting of a tap by, for example pressing or screwing the tap into, for example a thread inside the opening 417 of the mounting surface 416.

In the assembly shown in Fig. 2a, the x- and y - position components of the target position are characterized in that the positioning means in the form of ribs 432 attached laterally to the respective inner sides of the housing 403, cause alignment of the container 426 within the housing 403, in particular symmetrical to the housing 403. The x-position component of the target position is characterized, in particular by the feature that liquid from the container 426 can be tapped from the container 426 through a tap attached to the container 426. The symmetrical alignment of the container 426 inside the housing 403 is characterized in that, for example, at least one of the following symmetry criteria is fulfilled. The rear walls of the housing are arranged parallel to the rear walls of the container 426. The mounting surface 416 at the front of the container wall 431 is arranged essentially parallel to the front of the housing 403. Alternatively, or equally the side walls 404 of the housing 403 are arranged essentially parallel to the side walls of the container 426. The mounting surface 416 at the front of the container wall 431 is arranged essentially parallel to the front of the housing 403.

The liquid dispenser shown in Fig. 2a comprises a plane of symmetry. Consequently, the container 426, the housing 403 and the holder 409 also comprise a respective XZ plane of symmetry, whereby in the arrangement of the assemblies as shown in Fig. 2a, the symmetric components of the respective assemblies comprise a common XZ plane of symmetry. The axis of rotation R of the holder is symmetrically divided by the common XZ plane of symmetry of the assemblies.

The y-position component of the target position is defined in Fig. 2a, in particular by the feature that it coincides with the y-position of the XZ-symmetry plane of the liquid dispenser 400. Hence, also the outflow axis F coincides with the XZ-symmetry plane of the container 426 and the u-shaped holder 409.

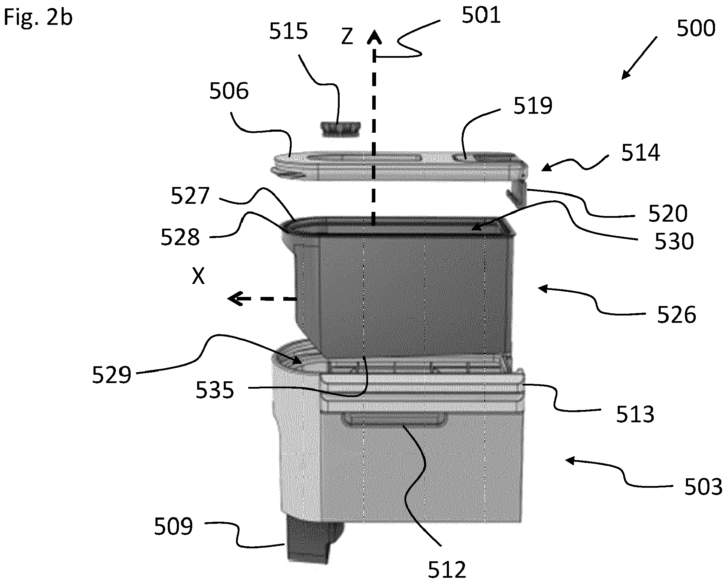

Fig. 2b shows a schematic exploded three dimensional view of an embodiment of the liquid dispenser 500 positioned within a coordinate system 501. Thereby the cover 506 is shown with a cap 515. Further, a container 526, a housing 503 and a holder 509 are shown arranged from a perspective side view.

The holder is shown in Fig 2b in its dispense position. The openings 512 on the side walls of the housing 503 are used to enable carrying the dispenser 500 for mounting the dispenser 500 at a position inside the trolley. The openings 512 are positioned symmetrically to each other within the side wall of the housing 503, on both sides of the liquid dispenser. Above the openings are notch-like guide rails 513. The guide rails 513 serve to hold the liquid dispenser 500 vertically in a certain position inside the trolley. The trolley is equipped with the corresponding complementary shaped guide elements, such that these complementary guide elements especially engage in the notches of the guide rails 513 at the housing. Thereby, the housing 503 of the liquid dispenser 500 is guided and supported into a position of the trolley during installation of the dispenser 500.

The container 526 shown in Fig. 2b has an inclined base plate 535. The inclination of the base plate 535 is adjusted so that the gravity guides the liquid in the direction of a tap. The positioning means on the inside of the base plate of the housing 503 are designed in their vertical extension, i.e. in the z-axial direction, such that they compensate for the inclination of the container 526. This means that the cover 506 rests planar on the entire edge area of the container 526 and of the edge area of the housing 503, whereas the edge areas result from the respective openings 529, 530 of the container 526 and of the housing 503.. The vertical extension of the positioning means located at the bottom plate of the housing 503, further ensures that the contact pressure of the cover presses the container 526 evenly over the edge area, thereby mechanically arresting the container in its z-axial position inside the housing 503.

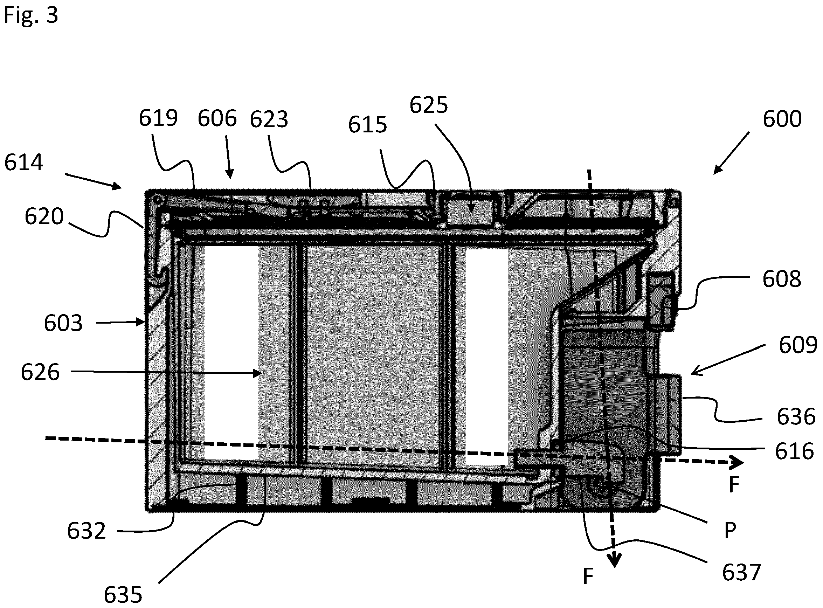

Fig. 3 shows a cross sectional drawing of the liquid dispenser 600 along its XZ-symmetry plane. In Fig. 3 the cover 606 is shown resting on the container 626 and the housing 603, with the lever mechanism 614 closed. The lever 618 is shown engaging the side of the housing 603. The cap 615 of the refill opening 625 of the cover 606 is screwed onto the refill opening 625 by means of a thread to close it. The cover 606 presses the sealing ring of the container 624 and thus also presses the container 624 onto the positioning means 632 shown at the bottom of the housing 603. The positioning means 632 show the different heights of the container bottom 635 to ensure an appropriate force transmission and thus a fixation of the container 624 in the Z-direction. The mounting surface 616 of the tap 637 is shown mounted essentially at the bottom of the container with the tap 637 inserted into the opening of the mounting surface 616. Due to the inclination of the container bottom 635, the liquid in the container 624 is directed towards the tap 637.

The tap 637 protrudes out of the housing 603 and into the inner part of the holder 609. The holder 609 is shown in its parking position. The lower part of the holder is rotatable mounted on the housing at the pivot point P. The holder has a handle 636 for turning the holder 609 from its parking position to its dispensing position. The holder 609 is shown in a recess of the housing 603. At the top of this recess a notch 608 is located to secure the holder 609 when it is in its parking position. This prevents the holder 609 from moving unintentionally from its parking position to another position.

In Fig. 3 the front surface of the container 626 is shown abutting against the inside of the recess. With its rear surface, the container 626 abuts against the inside of the rear wall of the housing 603. This prevents the container from moving along the X-axis of the liquid dispenser 600. The rigid mounting of the container 626 allows the tap 637 to be attached to the container 626, also when the container 626 is placed inside the housing, in particular placed at its target position.

Further shown in Fig. 3 is an arrangement of two outflow axis marked as F. The two axis F in combination define an outflow area. One of the outflow axis F is essentially arranged in direction of the liquid, in which the liquid exits the tap 637. The further outflow axis is essentially arranged in direction of the liquid, in which the liquid leaves the container 626 flowing towards the tap 637.

The vertical height of the container 626 extends in the z-direction, for example from 166.51 mm at the left edge section of the container 626 up to 175.26 mm at the right edge section. This results in the desired inclined course of the container's base plate 635. The container 626 extends in its longitudinal direction (corresponding to the x-direction of the liquid dispenser 600), for example between 261,04 mm and 331,96 mm.

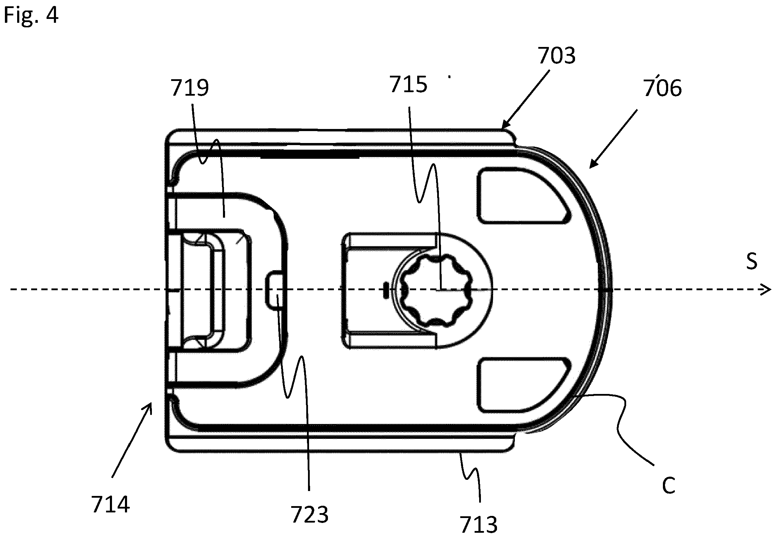

Fig. 4 shows a top view drawing of the cover 706 in an XY- plane of the dispenser. The cap 715 is centrally positioned within the cover 706, together with the lever mechanism 714, including the lever 719 and the slider 723. The cap 715 and the lever mechanism are both aligned along the central symmetry axis S, which is shown as a dotted line in Fig. 4.

The perimeter of the cover is indicated as a solid black line C in Fig. 4. Beside this perimeter C, the guide rails 713 protrude, thereby partially forming the contour of the housing 703. The cover 706 is essentially rectangular in shape with a circularly rounded front area, with the radius of the rounding being, for example 48.16 mm. The width of the cover, for example comprises 246 mm. The lever 719 comprises, for example an outer width of 158.4 mm, an inner width of 98 mm and a radius of curvature of 89.86 mm. The sliding mechanism 723 for locking the lever 719 is indicated at the front part of the lever 719.

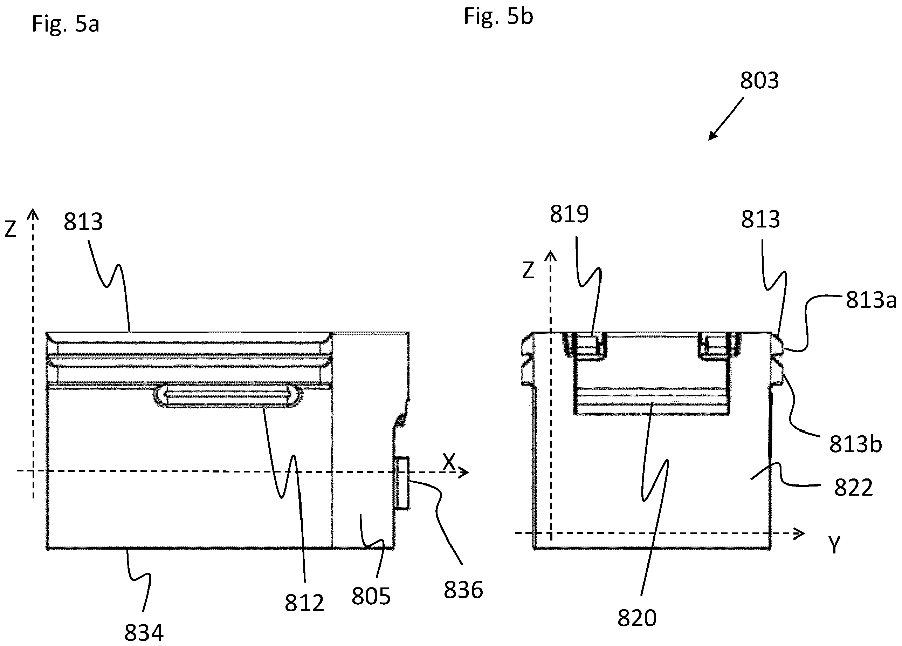

Fig. 5a shows a side view drawing of the housing 803 of the liquid dispenser in an XZ-plane as indicated by dotted the dotted X, Z lines.

The side wall 805 of the liquid dispenser shown in Fig. 5a is essentially rectangular in shape. The upper part of the side wall shows the guide rails 813 required to support the housing 803. The guide rails 813 run parallel to the bottom surface 834 of the housing 803 and comprise a length of, for example 295 mm, starting at the rear of the housing 803, i.e. the side of the housing, which opposite the front side comprising the tap. Below the parallel guide rails 813, there is an opening 812, which is used to enable carry the housing, for example for installing the housing 803 at a certain rack position of a trolley. The opening 812 extends parallel to the guide rails 813 and is located at approximately half of the overall length in the x-direction of the housing 803. The length of the housing , for example comprises 375 mm. The front part of the case, where the recess and the holder are located, has rounded side surfaces 805, which appear as rounded side faces over a width of, for example 80 mm of the total length of the housing side wall. The front part of the housing shows a handle 836 of the holder. The handle 836 is used to continuously move the holder from a first position into a second position.

Fig. 5b shows back view drawing of the housing 803 of the liquid dispenser in an YZ-plane as indicated by dotted the dotted Y, Z lines.

In this rear view of the housing 803 shown here, the arrangement of the guide rails 813 for pushing the housing into a position in a trolley is shown dimensioned. The guide rails 813 appear in their cross sectional view as made out of two parallel pins 813a, 813b, which are separated by a corresponding groove. The groove has a width of, for example 12.75 mm. The respective protruding pins 813a, 813b have a width of, for example 25 mm.

In the embodiment shown in Fig. 5b the clamp 820 of the lever mechanism, which for example has a width of 159 mm and engages, for example 86.5 mm below the upper edge of the housing in a correspondingly designed notch (not shown in the figure). The rear wall 822 of the housing is shown essentially rectangular.

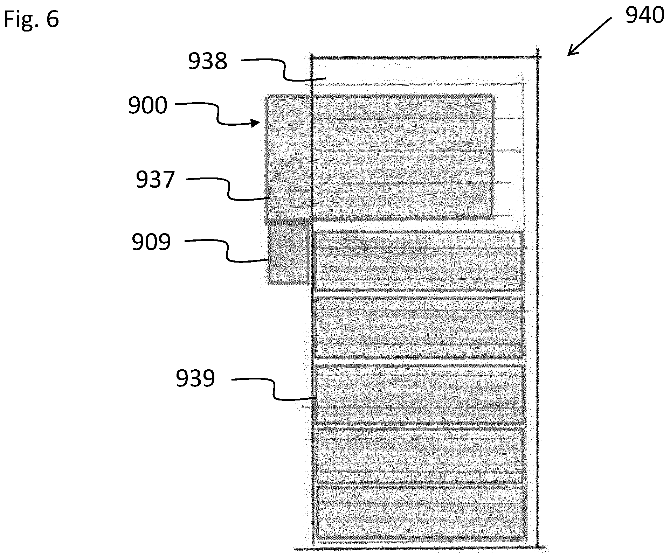

Fig. 6 shows a trolley 940 according to the invention comprising the liquid dispenser 900 in an upper position of one of its slide in racks 938. The figure also indicates further boxes 939 filling the slide in rack positions 938 directly underneath the dispenser rack position.

The fluid dispenser shown in Fig. 6 is shown with the holder 937 in its dispense position. The holder as shown in Fig. 6 blocks access to at least the insert positions 938 directly below its own insert position. Because the holder 937 is rotatable mounted on the housing of the liquid dispenser 900, access to the slide-in rack positions is achieved by rotating the holder 937 into its parking position. This prevents the liquid dispenser 900 from unnecessarily blocking areas, in particular further storage areas inside the trolley 940. The liquid dispenser 900 is shown mounted within the trolley in an operating, i.e. service position, which is a position during service. This means that the liquid dispenser 900 is not fully inserted in the insertion position 938 of the trolley 940, but is pulled out of this position 938 at least during the service period. For this purpose, the housing of the liquid dispenser 900 is pulled out of the insertion position 938 of the trolley 940 to such an extent that the holder 937 can be completely moved, i.e. rotated from its parking position to its dispense position. Therefore the holder 937 is rotatable connected to the housing of the dispenser 900. For this purpose, the trolley 940 is equipped with an advantageous fastening mechanism that allows pulling the liquid dispenser at least partially out of the rack position into the service position. This prevents the dispenser 940 from being inadvertently released out of the rack position of the trolley 940.

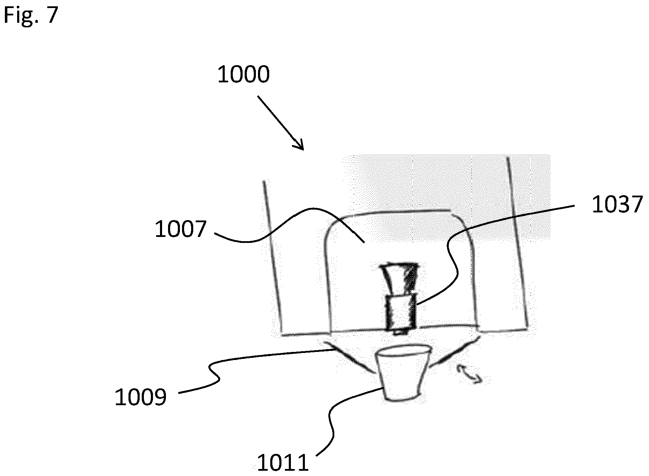

In Fig. 7 an embodiment of a holder of the liquid dispenser 1000 comprising arms, e.g. swivel arms 1009 is schematically shown. Therefore the holder comprises two swivel arms rotatable mounted on the housing, in particular within a recess 1007 of the housing of the dispenser 1000. Fig 7 schematically indicates each of the tow rotatable mounted swivel arms to clamp or grip a cup 1011 from a respective side, such that the cup 1011 is held by the arms 1009 during dispensing. The arms 1009 are stowed in their parking position in the recess, such that the arms 1009 do not protrude from the recess 1007 in their parking position.

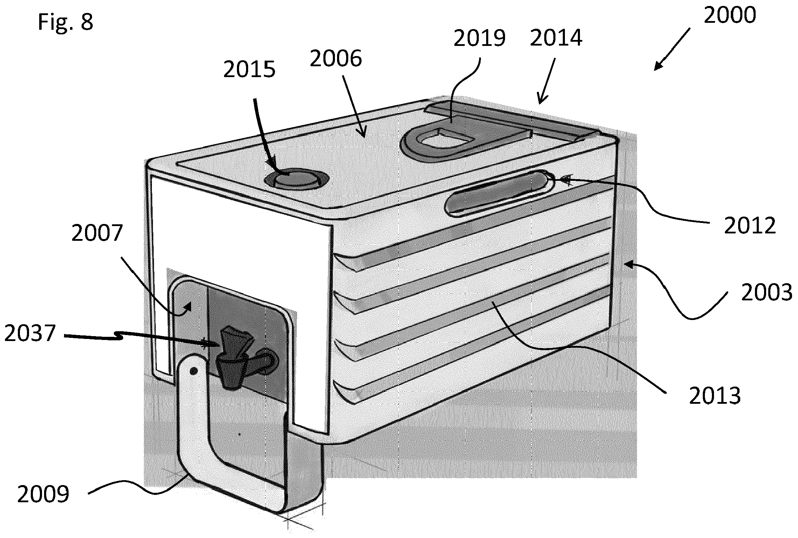

Fig 8 shows schematically a further embodiment of the liquid dispenser 2000. The housing 2003 of the liquid dispenser 2000 is shown in cubic form. The cover 2006 of the housing comprises the cap 2015, which is flush with the housing surface and seals the refill opening. In addition, Fig. 8 shows the cover's locking device 2014, which is configured as a lever mechanism with a lever 2019.The housing comprises an opening 2012 in its side, which serves for transporting the liquid dispenser 2000. Underneath the opening 2012 parallel notches 2013 are arranged, which appear as lines in Fig. 8. The notches 2013are used to mount the housing 2003 of the liquid dispenser 2000 in a trolley rack position or in a galley. The holder 2009 for supporting a cup during dispensing is shown rotatable mounted at the front side of the housing 2003 as a u-shaped tab. The holder is rotatable connected to the housing at two points of the housing 2003, such that the holder 2009 can be folded or rotated from the dispensing position, as shown in Fig. 8, into the parking position, not shown in Fig. 8. In the parking positon the holder is stored in the recess 2007, such that the holder 2009 does essentially not protrude away from the housing 2003. Therefore, the recess 2007 matches the shape of the holder 2009. A tap 2037 is mounted symmetrically to the u-shaped geometry of the holder 2009 and is located above the holder 2009. The tap 2037 is located, such that a cup fits in between the u-shaped holder and the tap 2037, when the holder 2009 is in its dispense position as shown in Fig. 8. The cap is positioned essentially in the middle of the u-shaped holder while dispensing.

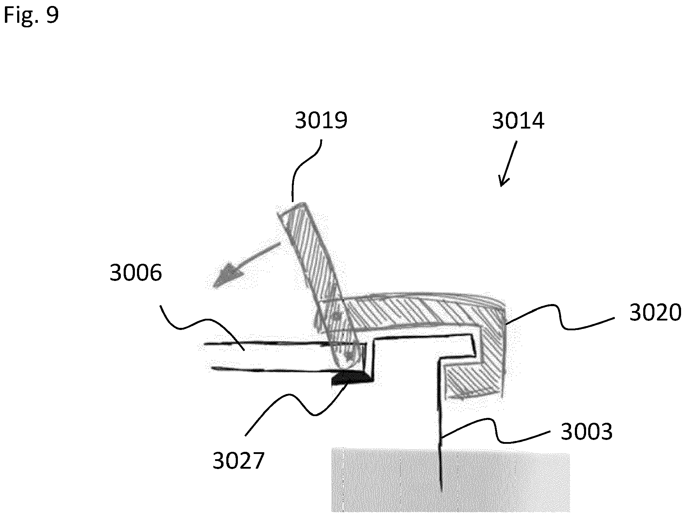

Fig. 9 schematically shows a locking device 3014, implemented here as a lever mechanism. The lever 3019 is shown protruding upwards from the cover 3006. The lever 3019 is moved downwards towards the cover 3006 to close the mechanism 3014, thereby pressing the cover onto the housing 3003 and the container placed at its target position inside the housing. The contact pressure force is achieved on the cover 3006 by a clamp-shaped structure 3020 of the lever mechanism 3014 engaging under a projection on the housing 3003. By turning the lever 3019, the cover 3006 is pressed onto a sealing located inside a rim of the container, such that the cover presses the container into positioning means of the housing and thereby seals the container fluid-tight in its position in side the housing.. Because the pressure is generated means clamping the clamp-shaped element under a projection of the housing, the mechanism also tightens the cover to the housing.

## Claims

1. A liquid dispenser for a trolley and/or a galley comprising
a housing,
a container for containing a liquid, the container being placed inside the housing and
a dispensing means for dispensing the liquid, wherein
the housing comprises a holder, which is moveable between at least a first position and a second position,
wherein the first position is a parking position of the holder and
wherein the second position is a dispense position of the holder, in which the holder is configured to hold a cup while fluid is dispensed into the cup from the container.

2. Liquid dispenser according to claim 1, wherein the holder is rotatably mounted at the housing to move between the dispense position and the parking position.

3. Liquid dispenser according to claim 1 or 2, wherein the housing comprises a recess configured to receive the holder when the holder is in its parking position.

4. Liquid dispenser according to any of the previous claims, wherein the housing comprises an opening for inserting and/or removing the container and a removable cover for covering the opening of the housing, or the opening of the housing and an opening of the container.

5. Liquid dispenser according to claim 4, wherein the cover comprises a locking device, which in a locking position locks the cover to the housing and which in a release position releases the cover from the housing to allow replacing the container.

6. Liquid dispenser according to claims 4 or 5, wherein the container comprises an opening, which is closed by the cover, when the cover covers the opening of the housing.

7. Liquid dispenser according to any of the previous claims, wherein the container comprises first positioning means, configured for placing the container at a target position inside the housing and wherein the housing comprises second positioning means, configured for placing the container at the target position inside the housing, and wherein the first and the second positioning means are configured to interact with each other, such that at the target position the container is arranged relative to the housing , to allow for dispensing the liquid contained in the container into the cup while the cup is hold by the holder in the dispense position.

8. Liquid dispenser according to any of the previous claims, wherein the container is snug fit with the housing.

9. Liquid dispenser according to claim 5, 6 and 8, wherein the opening of the container is defined by an edge area of the container, which comprises a sealing, and wherein the sealing is snug fit with the cover, when the cover is locked by the locking device.

10. Liquid dispenser according to any of the previous claims, wherein the housing comprises support means, configured to position the liquid dispenser at a rack position of a trolley or a galley or on top of the trolley.

11. Liquid dispenser according to any of claims 4 to 10, wherein the cover of the housing comprises a refill-opening, through which the opening of the container can be accessed and which is lockable by a sealing cap.

12. Liquid dispenser according to any of the previous claims, wherein the dispensing means, which is preferably a tap for dispensing the liquid, is part of the container or the housing.

13. Liquid dispenser according to any of the previous claims, wherein the housing comprises a cutout to allow accessing the container, in particular for mounting and/or dismounting of the dispensing means, while the container is placed inside the housing.

14. A housing for a liquid dispenser of a trolley and/or a galley, wherein the housing comprises
a holder, which is moveable between at least a first position and a second position,
wherein the first position is a parking position of the holder and
wherein the second position is a dispense position of the holder, in which the holder is configured to hold a cup while fluid is dispensed into the cup from the container and
the housing further comprises
an opening for inserting and/or removing of a container and a removable cover for covering the opening of the housing, or the opening of the housing and the container.

15. An aircraft trolley and/or a galley comprising the liquid dispenser according to any of claims 1 to 13 or a housing according to claim 14, wherein the trolley and/or the galley further comprises support means to mechanically positon and to mechanically guide mounting and/or unmounting of the liquid dispenser, wherein
the support means comprise grooved pieces, configured to receive oppositely grooved pieces of the housing of the dispenser to position the liquid dispenser at a rack position of the trolley and/or the galley.

16. Liquid dispenser according to any of the previous claims, wherein the front panel of the housing of the liquid dispenser comprises fixing means to fix advertising slides, in particular wherein it comprises a convex curved area, preferably a cylindrically or conically curved area, wherein the convex curved area comprises fixing means to fix advertising slides at the convex curved area.
